# EUROPEAN PATENT SPECIFICATION

(11) **EP 3 545 753 B1**
(45) Date of publication and mention of the grant of the patent: **04.11.2020**
(21) Application number: 18164270.3
(22) Date of filing: 27.03.2018
(51) Int. Cl.: A01G 9/02

(54) **A PLANTING SYSTEM AND A METHOD FOR ASSEMBLING THE PLANTING SYSTEM**
PFLANZSYSTEM UND VERFAHREN ZUR MONTAGE DES PFLANZSYSTEMS
SYSTÈME DE PLANTATION ET PROCÉDÉ D'ASSEMBLAGE DU SYSTÈME DE PLANTATION

(43) Date of publication of application: 02.10.2019
(73) Proprietor: Growdeal Oy, 20900 Turku (FI)
(72) Inventor: HELANDER, Hannu, 20900 Turku (FI); SIITONEN, Petri, 20660 Littoinen (FI); VIRTANEN, Kalle, 21420 Lieto (FI)
(74) Representative: Berggren Oy, Turku

(56) References cited:
- EP-A1- 0 544 106
- EP-A1- 0 609 510
- EP-A1- 2 256 717
- DE-U1-202012 000 990
- US-A1- 2007 266 630

## Description

### TECHNICAL FIELD OF THE INVENTION

The present invention relates to a planting system and a method for assembling the planting system according to the preambles of the appended independent claims.

### BACKGROUND OF THE INVENTION

Gardening and growing of different kinds of plants, for example, flowers, greeneries and herbs at home is increasingly popular. Houseplants are known to have beneficial effects to a living environment and life. Besides, the plants can be used as a food. Growing plants at home is regarded an ecologically and ethically modern way to take responsibility of reducing a carbon footprint.

In households without an own outdoor garden, plants can be grown indoors or at a balcony. Typically, the plants which are started in a greenhouse from seeds are purchased from a garden store or market as pre-potted seedlings or young plants. The seedlings or young plants can be then re-planted at home to another planting pot or a balcony box. Re-planting of a plant requires, however, special equipment and accessories such as a correct-sized pot, soil and fertilizers. Additionally, re-planting involves several steps which could be difficult and messy to perform indoors, for example, filling the planting pot with soil. There is also a possibility to fail with an alignment of the plant and cause damages to it. Because the re-planting of the plant is laborious and time consuming, there is an even growing need to make the re-planting of the plant easier.

Documents EP 0609510 A1, EP 0544106 A1, DE 202012000990 U1 and EP 2256717 A1 disclose various planting pots.

### OBJECTIVES OF THE INVENTION

It is the main objective of the present invention to reduce or even eliminate problems in the prior art.

It is an objective of the present invention to provide a planting system, which facilitates re-planting of plants. In more detail, it is an objective of the present invention to provide a planting system, which enables simple and easy re-planting of various kinds of plants.

It is a further objective of the invention to provide a method for assembling the planting system which method enables quick and straightforward production of the planting system.

In order to realise the above-mentioned objectives, the planting system and the method for assembling the planting system according to the invention are characterised by what is presented in the characterising parts of the appended independent claims. Advantageous embodiments of the invention are described in the dependent claims.

### DESCRIPTION OF THE INVENTION

A planting system according to the invention comprises a planting receptacle having an opening and a bottom, the bottom of the planting receptacle being openable and closable, and a planting member having a cavity with an opening through which a root ball of a plant is to be inserted into the cavity, the planting member being arranged inside the planting receptacle. The planting system according to the invention comprises also a detachable cover having a first surface and a second surface, the detachable cover being arranged to cover the opening of the planting receptacle and the detachable cover comprising means for aligning the planting member in the planting receptacle, and soil arranged in a space between the planting receptacle and the planting member. The means for aligning comprises at least one protrusion extending from the second surface of the detachable cover and having the same shape as the opening of the planting member.

The planting system according to the invention facilitates re-planting of a plant by providing a planting receptacle with a ready-fitted planting member where the plant is easy to be re-planted. A detachable cover which covers the planting receptacle comprises means for aligning the planting member by which the planting member is kept in place while the planting system is not in use. The detachable cover is meant to be detached when the plant is re-planted into the planting receptacle. The planting receptacle is filled with a correct amount and composition of soil, so that after a root ball of a plant is inserted to the cavity of the planting member, the roots of the plant can freely grow to the soil. With the root ball of a plant is here meant a root part of the plant that typically lies below the surface of the soil. The planting system according to the invention can be used for re-planting as such or it can be fitted, for example, into the other planting pot or balcony box. The planting system can be used for re-planting of variety kinds of plants, for example, flowers, pre-grown herbs and salads. By using the planting system according to the invention, the plant can be easily re-planted to a straight and correct position without special equipment and accessories. This makes re-planting and further growing of the plants easy and effortless.

The planting receptacle may have any shape. The planting receptacle can be, for example, a round pot or a rectangular box comprising a wall having a first end which defines an opening of the planting receptacle and a second end which defines a bottom of the planting receptacle. Preferably, the opening and the bottom of the planting receptacle are opposite to each other. The shape of the opening and the bottom of the planting receptacle may be round or rectangle and the bottom may be flat. The bottom of the planting receptacle is openable and closable, which enables the planting receptacle to be filled with soil from the bottom side. The diameter or the side length of the planting receptacle can be, for example, in the range of 60 to 1000 mm. The height of the planting receptacle can be, for example, in the range of 50 to 1000 mm.

A planting member according to the invention comprises a wall having a first end and a second end surrounding a cavity adapted to receive a root ball of a plant. The first end of the wall defines an opening of the cavity trough which a root ball of a plant is to be inserted to the cavity. The second end of the wall defines a bottom of the planting member which is preferably closed. The bottom of the planting member may comprise through holes for facilitating the roots of the plant to grow into the soil. The wall of the planting member may be conical when a diameter of the opening is larger than the diameter of the bottom. In that case, the planting member and the cavity have a shape of a truncated cone. The wall of the planting member may also be cylindrical when the opening and the bottom are of equal diameter. In that case the planting member and the cavity have a shape of a cylinder. Preferably, the wall of the planting member is conical when it ensures good fit of the root ball to the cavity. This enhances support for the plant.

The inner diameter, i.e. the diameter of the cavity of the planting member is preferably equivalent to the diameter of the root ball of the plant. The inner diameter of the planting member can be, for example, in the range of 30 to 500 mm. The height of the planting member is at least the same or higher as the height of the root ball of the plant. The height of the planting member can be, for example, in the range of 50 to 1000 mm. The wall thickness of the planting member can be, for example, less than 5 mm. The wall of the planting member may comprise through holes for facilitating the roots of the plant to grow into the soil.

The planting member is arranged into the planting receptacle in such a manner that the opening of the planting member opens essentially to the same direction as the opening of the planting receptacle. Preferably, the axis of the planting member is essentially perpendicular to the bottom of the planting receptacle and the opening of the cavity is opposite to the bottom of the planting receptacle. The opening of the cavity and the opening of the planting receptacle may be essentially at the same height. An advantage of the planting member is that it ensures a straight position of a plant which is inserted into the cavity of the planting member.

A detachable cover is arranged to cover the opening of the planting receptacle. The detachable cover has a first surface and a second surface. The second surface is arranged against the first end of the planting receptacle's wall which defines the opening. The shape of the detachable cover may be round or rectangle. The shape of the detachable cover is preferably the same as the shape of the opening of the planting receptacle. The detachable cover may have essentially the same size as the opening of the planting receptacle. The detachable cover closes the opening of the planting receptacle and enables the planting receptacle to be filled from the bottom side. The edges of the detachable cover may be bent downwards. The first surface of the detachable cover may be flat. The detachable cover prevents the access of the soil out from the planting receptacle during assembly and storage of the planting receptacle and enables the planting receptacles to be stored one on the other. The detachable cover also prevents the access of the soil into the planting member during the filling of the planting receptacle or during the storage.

The detachable cover comprises means for aligning the planting member at the second surface of the cover. The means for aligning the planting member align the planting member to a correct place and position in the planting receptacle. They also keep the planting member in place when the planting receptacle is filled with soil and also during the storage. The means for aligning the planting member may comprise a protrusion, a groove or an element having a shape of a truncated cone or a cylinder. The detachable cover may comprise at least one means for aligning the planting member. Preferably, the detachable cover comprises one means for aligning for every planting member in the planting receptacle. The means for aligning are preferably attached to the second surface of the detachable cover so that they can locate in the centre of the planting receptacle if the receptacle is round or cubical or in the centre line of the planting receptacle at a constant distance from each other if the receptacle is rectangular. The means for aligning the planting member may be attached to the detachable cover, for example, with glue or tape or the detachable cover and the means for aligning the planting member may be formed as a single piece. The detachable cover and the means for aligning the planting member may be made of the recyclable waterproof board, preferably paperboard.

The means for aligning the planting member may be arranged to attach the opening or the inner or the outer surface of the planting member. Preferably, the means for aligning the planting member are arranged inside the planting member. The means for aligning the planting member may be attached to the planting member in such a manner that the opening of the planting member is against the second surface of the detachable cover.

The space between the inner surface of the planting receptacle and the outer surface of the planting member is filled with soil. The soil can be arranged also to the bottom of the planting receptacle in which case, the bottom of the planting member is onto the soil. The planting receptacle is filled with soil preferably from the bottom side the planting system being arranged upside down. The soil can also be compressed during filling. The used soil may be any substance or media in which vegetation may take root and grow, and includes not only earth but also compost, manure, muck, humus, sand and the like, adapted to support plant growth. The soil, regardless of its composition, may be filled into the planting receptacle either dry or in the presence of moisture. The soil may also comprise fertilizers for enhancing the rooting and growing of the re-planted plant.

The means for aligning comprises at least one protrusion extending from the second surface of the detachable cover. The protrusion can consist of plurality of portions which are arranged opposite to each other to a shape of a circle or rectangle. In that case, the protrusion consists of at least two portions. The protrusion can also be constant, when it may have a shape of a ring or rectangle. The protrusion has the same shape as the opening of the planting member. The protrusion is arranged inside or outside the opening of the planting member in such a manner that the protrusion attaches to the planting member and aligns it to the correct place. The means for aligning can comprise a plurality of protrusions extending from the second surface of the detachable cover. Each protrusion can align one planting member. A height of the protrusion can be, for example, in the range of 100 to 500 mm.

According to an embodiment of the invention the protrusion has a shape of a ring. In that case, the opening of the planting member is also round. The protrusion extends from the second surface of the detachable cover. The ring-shaped protrusion may attach the inner or outer surface of the planting member. The protrusion having a shape of a ring supports the planting member and keeps it in place during the filling and storing of the planting receptacle.

According to an embodiment of the invention the means for aligning is a truncated cone or a cylinder. The truncated cone or the cylinder has a peripheral wall having a first end which is attached to the second surface of the detachable cover and an opposite second end which defines a bottom of the truncated cone or the cylinder. The bottom of the truncated cone or the cylinder can be closed or can be perforated. The truncated cone has a diameter of the first end larger than a diameter of the second end. The cylinder has a diameter of the first end equal to a diameter of the second. If the planting member has a shape of a truncated cone, the means for aligning is preferably a truncated cone. Respectively, if the planting member has a shape of a cylinder, the means for aligning is preferably a cylinder. The truncated cone or the cylinder is arranged inside the cavity of the planting member. The outer diameter of the truncated cone or the cylinder is fitted to be close to the inner diameter of the planting member so that the truncated cone or the cylinder can fit inside the cavity of the planting member. The outer diameter of the truncated cone or the cylinder can be, for example, in the range of 30 to 500 mm. The height of the truncated cone or the cylinder is preferably less than the height of the planting member. The height of the truncated cone or the cylinder can be, for example, in the range of 50 to 1000 mm. The same shape of the means for aligning and the planting member enables the planting member to be well aligned and supported.

According to an embodiment of the invention the means for aligning is arranged inside the cavity of the planting member. Then, the opening of the planting member attaches to the second surface of the detachable cover and the planting member holds still. Preferably, the outer diameter of the means for aligning are fitted to be close to the inner diameter of the planting member so that the means for aligning can fit inside the cavity of the planting member. This enables good support to the planting member and prevents the planting member to be filled with soil.

According to an embodiment of the invention the detachable cover and the means for aligning are formed as a single piece. Due to the uniform structure, there are no joints between the planting member and the means for aligning, which makes the structure stronger and more resistant.

According to an embodiment of the invention the planting receptacle and the detachable cover are made of a recyclable waterproof board. The used board may be any board material which can be recycled, for example, paperboard or cardboard. The board may be coated to be waterproof or treated with a waterproofing agent, in which case it will not disintegrate when exposed to moisture for long durations. At least the inner surface of the planting receptacle and/or the detachable cover is coated or treated to remain relatively unaffected by water. The empty planting receptacle and the detachable cover may be recycled with the board waste. The outer surface of the planting receptacle and/or the detachable cover may be patterned or colored for a decoration purposes.

According to an embodiment of the invention the planting member has a shape of a truncated cone or a cylinder. The planting member having a shape of the truncated cone comprises a peripheral wall surrounding a cavity adapted to receive a root ball of a plant. The wall has a first end defining an opening of the cavity and a second end defining a closed bottom. The opening has a diameter larger than a diameter of the bottom. The cavity of the truncated cone is sized such that the plant with the standard sized root ball will fit closely into the cavity. The truncated cone is arranged into the planting receptacles in such a manner that the opening of the cavity opens to the same direction as the opening of the planting receptacle. The openings can be at the same high. The purpose of the planting member is to support the root ball of the plant to a correct position. Due to the shape of the truncated cone of the planting member, the root ball of the plant fits well inside the cavity and the planting member gives good support to the plant.

The planting member having a shape of a cylinder comprises a peripheral wall surrounding a cavity adapted to receive a root ball of a plant. The wall has an opposite first and second ends, the first end defining an opening of the cavity and the second end defining a closed bottom. The diameters of the first and the second end are equal. The cavity of the cylinder is sized such that the plant with the standard sized root ball will fit closely into the cavity. The cylinder is arranged inside the planting receptacle in such a manner that the opening of the cavity opens to the same direction as the opening of the planting receptacle. The openings can be at the same high. The cylinder-shaped planting member supports the root ball of the plant in a straight position.

According to an embodiment of the invention the planting member is made of a biodegradable material. In this context the term "biodegradable" refers to the materials which are capable of being broken down (decomposed) by the action of living microorganisms, usually bacteria. Suitable materials for the planting member are, for example, recycled biodegradable pulp, biodegradable plastics, board or a combination of those. An advantage of using the biodegradable material is that the planting member decomposes to soil after watering the re-planted plant and enables better and faster rooting of the plant. Biodegradability of the planting member enables also the planting member to be recycled with soil. The biodegradation time can vary depending on the used material. The biodegradation time of the planting member can be, for example, in the range of 1 to 4 weeks.

According to an embodiment of the invention the planting member is made of a plastic material which is hard and recyclable. The used material may be any suitable recyclable plastic material, which can be formed to a shape of the planting member and has sufficient hardness, for example, polymer, composite or combinations of those. Preferably, the planting member is made of polymer, such as polyethylene or polypropylene. The wall and bottom of the planting member may comprise through holes for the better rooting of the plant. The planting member made of polymer can be re-used for planting or recycled with the plastics waste.

According to an embodiment of the invention the planting system comprises a biodegradable waterproof film between the detachable cover and the planting receptacle. The film can be made of, for example, plastic, paper, pulp or any other biodegradable material. Preferably, the film is arranged over the opening of the planting receptacle in such a manner that the area between the planting member and the planting receptacle, i.e., the soil is covered. The film prevents soil from drying out and also keeps the soil inside the planting receptacle. The film can be removed when the planting receptacle is used.

According to an embodiment of the invention the planting receptacle comprises a space for excess water between the planting member and the bottom of the planting receptacle. The planting receptacle may comprise an intermediate floor or plate which separates soil and the space for excess water from each other. The floor or plate may comprise through holes. An advantage of the space is that the excess water can flow away from the roots of the plant and the plant is not suffering overwatering.

According to an embodiment of the invention the planting receptacle comprises a drainage material at the bottom of the planting receptacle. In this case, the soil is arranged over the drainage material. The planting member may be in contact with the drainage material or there may be soil between the planting member and the drainage material. The used drainage material can be, for example, coarse sand, gravel, pebbles or pot shards. The drainage material allows water in the soil to drain freely, so, adequate air is available for the roots.

According to an embodiment of the invention the planting system comprises a plurality of planting members arranged inside the planting receptacle. The plurality of planting members may be arranged at a constant distance from each other. If the planting system comprises a plurality of planting members, the number of the means for aligning the planting member at the detachable cover is preferably the same as the number of the planting members, i.e., each planting member has its own means for aligning at the detachable cover. The advantage of having the plurality of planting members in the same planting receptacle is that, the plurality of plants can be more easily and faster re-planted to the same planting receptacle in correct places.

According to an embodiment of the invention the planting system comprises a carry handle arranged around the planting receptacle. The carry handle is for carrying the planting system but also keeps the detachable cover in place. The carry handle is preferably shaped to adapt the shape of the planting system. The carry handle can be made of a recyclable waterproof board, preferably paperboard.

When the planting system according to the invention is used, the detachable cover comprising the means for aligning the planting member is first detached. Possible biodegradable waterproof film between the detachable cover and the planting receptacle is removed. If the plant to be re-planted is pre-potted, a temporary pot is removed before re-planting. The root ball of the plant is then inserted into the cavity of the planting member. The soil can be gently tamped down or spread over the roots of the plant after inserting the root ball of the plant into the planting member. The planting member can also be removed from the planting receptacle before re-planting a plant. The root ball of the plant may be inserted to the hole, which has been generated to the soil and the soil may be compressed around the root ball.

An advantage of the planting system is that re-planting of the plant is easy and effortless because re-planting can be done without separately buying soil and correct-sized planting pot. Besides, there arises no mess, when the soil is already fitted into the planting receptacle. Another advantage of using the planting system according to the invention for re-planting of a plant is that a life time of the plants, for example, potted herbs or salads, can be extended when they can be further grown in the planting system. The use of the planting system for the further growing of the plants can be seen as a more ecological choice than throwing the viable plant to rubbish bin after the first time of use.

The present invention also relates to a method for assembling the planting system according to the invention. The method comprises arranging the planting receptacle with the detachable cover upside down, positioning the planting member inside the planting receptacle from the bottom of the planting receptacle in such a manner that the opening of the planting member is in contact with the means for aligning, filling the space between the planting member and the planting receptacle with soil, and closing the bottom of the planting receptacle. The planting system assembled by the method according to the invention is turned around after closing the bottom of the planting receptacle. Assembling the planting system according to the method the assembly is more efficient and faster.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the planting system as well as the method for assembling the planting system according to the invention, even though this is not always separately mentioned.

### BRIEF DESCRIPTION OF THE DRAWINGS

- Fig. 1: illustrates a planting system according to one embodiment of the invention when in use,
- fig. 2: illustrates a cross section of the planting system of fig. 1 as assembled,
- fig. 3a: illustrates a first step of an assembly of a planting system according to an embodiment of the invention,
- fig. 3b: illustrates a second step of an assembly of a planting system according to an embodiment of the invention,
- fig. 3c: illustrates a ready to use planting system according to an embodiment of the invention, and
- fig. 3d: illustrates a planting system according to one embodiment of the invention when the planting system is to be used.

### DETAILED DESCRIPTION OF THE DRAWINGS

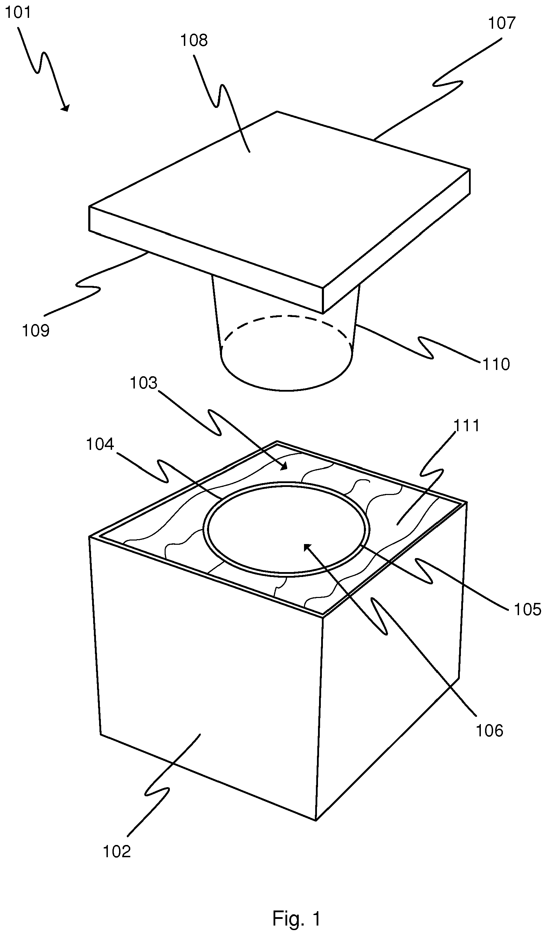

Fig. 1 illustrates a planting system according to one embodiment of the invention when the planting system is used. The planting system 101 comprises a planting receptacle 102 having an opening 103 and one planting member 104 having a cavity 105 with an opening 106 through which a root ball of a plant is to be inserted into the cavity 105. The planting member 104 has a shape of a truncated cone. The planting member 104 is arranged inside the planting receptacle 102 in such a manner that the opening 106 of the planting member 104 opens to the same direction as the opening 103 of the planting receptacle 102. The openings 103, 106 are essentially at the same high and the planting member 104 locates essentially in the middle of the planting receptacle 102. The planting system 101 comprises also a detachable cover 107 which is meant to be detached when the plant is re-planted to the planting receptacle 102. The detachable cover 107 has a first 108 and a second surface 109, the second surface 109 comprising means for aligning the planting member 110 as a truncated cone. The detachable cover 107 and the means for aligning 110 can be formed as a single piece. The planting system 101 has also soil 111 arranged in a space between the planting receptacle 102 and the planting member 104.

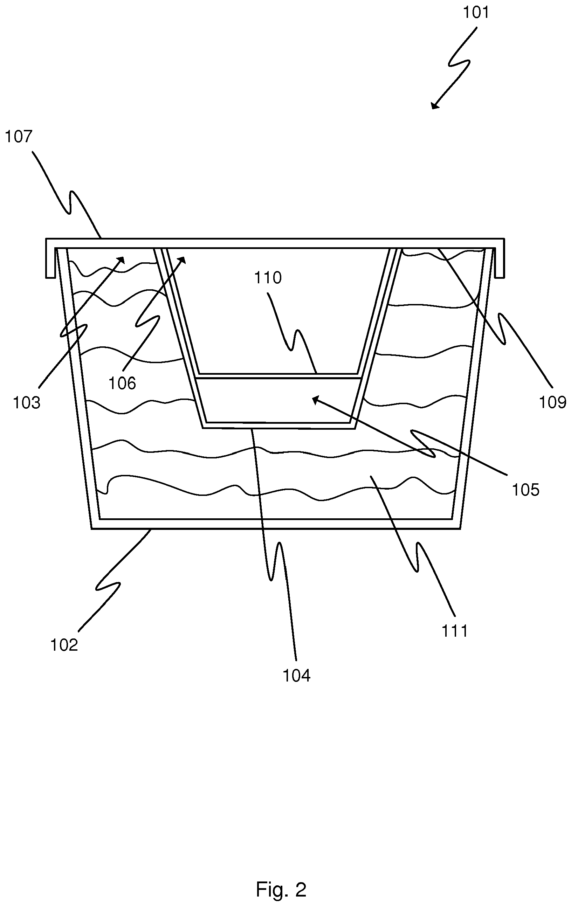

Fig. 2 illustrates a cross section of the planting system of fig. 1 as assembled. The detachable cover 107 is covering the opening 103 of the planting receptacle 102 in such a manner that the whole opening 103 is closed. The edges of the detachable cover 107 are bent downwards to hold better in place. The means for aligning the planting member 110 attached to the second surface 109 of the detachable cover 107 are set inside the cavity 105 of the planting member 104. The means for aligning the planting member 110 are sized so that it can fit closely into the cavity 105 of the planting member 104. This gives good support to the planting member 104 and keeps it in place. The opening 106 of the planting member 104 is preferably against the second surface 109 of the detachable cover 107 in which case the opening 106 of the planting member 104 is at the same height as the opening 103 of the planting receptacle 102.

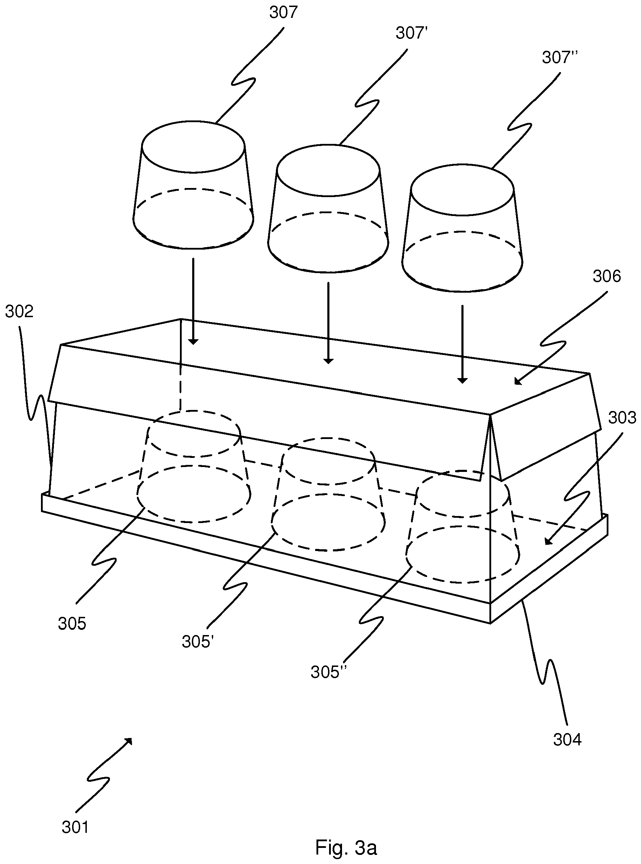

Fig. 3a illustrates a first step of an assembly of a planting system according to an embodiment of the invention. The planting system 301 comprises a rectangular planting receptacle 302 having an opening 303 and a detachable cover 304 covering the opening 303 of the planting receptacle 302. The detachable cover 304 comprises three means for aligning the planting members 305, 305', 305" as a truncated cones attached to the second surface of detachable cover 304. The empty planting receptacle 302 covered by the detachable cover 304 is arranged upside down in such a manner that the bottom 306 of the planting receptacle 302 is upwards. The bottom 306 of the planting receptacle 302 is open. The planting system 301 comprises also three planting members 307, 307', 307" having a shape of truncated cones. The planting members 307, 307', 307" are arranged inside the planting receptacle 302 through the bottom 306 of the planting receptacle 302.

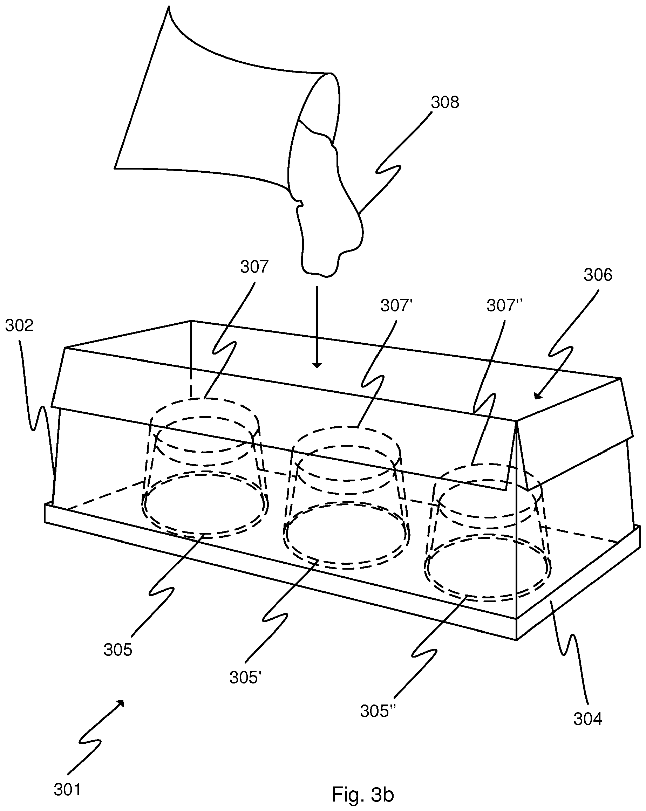

Fig. 3b illustrates a second step of an assembly of a planting system according to an embodiment of the invention. The planting members 307, 307', 307" are now arranged inside the planting receptacle 302 so that the planting members 307, 307', 307" are positioned over the means for aligning the planting members 305, 305', 305". The opening of planting member 307, 307', 307" is in contact with the means for aligning 305, 305', 305" when the means for aligning 305, 305', 305" aligns the planting members 307, 307', 307" in correct place in the planting receptacle 302. After the planting members 307, 307', 307" are arranged over the means for aligning 305, 305', 305", the space between the planting members 307, 307', 307" and the planting receptacle 302 is filled with soil 308 to the bottom 306 level. The soil 308 can be gently compressed. Finally, the bottom 306 of the planting receptacle 302 is closed and the planting system 301 is turned around.

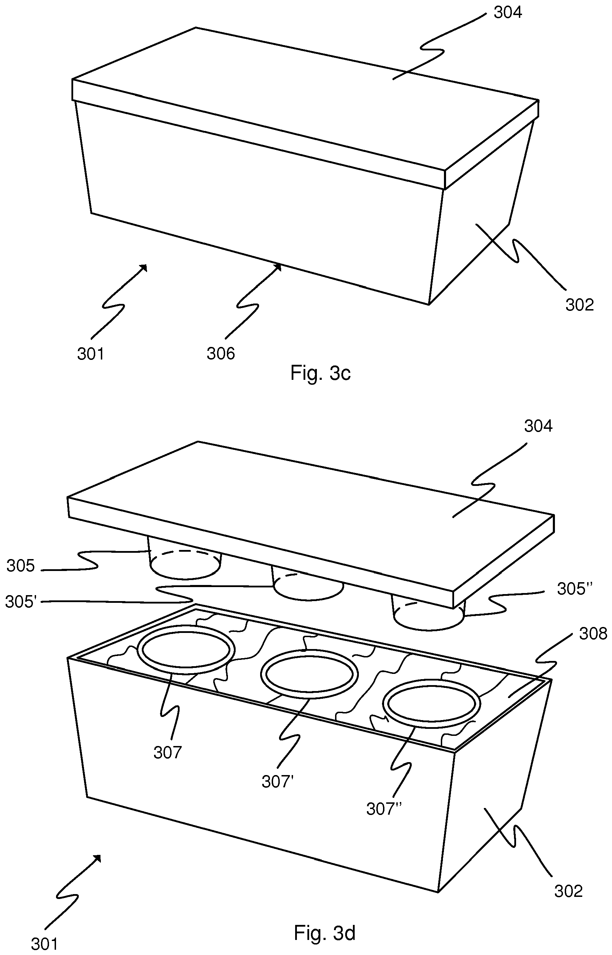

Fig. 3c illustrates a ready to use planting system according to an embodiment of the invention. The planting system 301 is ready to be used when the bottom 306 of the planting receptacle 302 is closed and the planting system 301 is turned around. The planting receptacle 302 and the detachable cover 304 are made of a recyclable waterproof board and can be patterned or colored for a decoration purposes. The planting system 301 can be easily and safely transported and stored due to the means for aligning which keeps the planting members in place and correct position inside the planting receptacle 302.

Fig. 3d illustrates a planting system according to one embodiment of the invention when the planting system is to be used. When the plant is re-planted to the planting system 301, the detachable cover 304 comprising three truncated cone shaped means for alignings 305, 305', 305" is detached from the planting receptacle 302. The planting receptacle 302 comprises now three planting members 307, 307', 307" rounded by soil 308. The root ball of the plant is inserted into the planting member 307, 307', 307". The soil 308 can be spread over the roots of the plant.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A planting system (101, 301), comprising:
- a planting receptacle (102, 302) having an opening (103, 303) and a bottom (306), the bottom (306) of the planting receptacle (102, 302) being openable and closable,
- a planting member (104, 307, 307', 307") having a cavity (105) with an opening (106) through which a root ball of a plant is to be inserted into the cavity (105), the planting member (104, 307, 307', 307") being arranged inside the planting receptacle (102, 302),
- a detachable cover (107, 304) having a first surface (108) and a second surface (109), the detachable cover (107, 304) being arranged to cover the opening of the planting receptacle (103, 303), the detachable cover (107, 304) comprising means for aligning the planting member (110, 305, 305', 305") in the planting receptacle (102, 302), and
- soil (111, 308) arranged in a space between the planting receptacle (102, 302) and the planting member (104, 307, 307', 307"),
**characterised in that** the means for aligning (110, 305, 305', 305") comprises at least one protrusion extending from the second surface (109) of the detachable cover (107, 304) and having the same shape as the opening (106) of the planting member (104, 307, 307', 307").

2. The planting system (101, 301) according to claim 1, **characterised in that** the protrusion has a shape of a ring.

3. The planting system (101, 301) according to claim 1, **characterised in that** the means for aligning (110, 305, 305', 305") is a truncated cone or cylinder.

4. The planting system (101, 301) according to any of the preceding claims, **characterised in that** the means for aligning (110, 305, 305', 305") is arranged inside the cavity (105) of the planting member (104, 307, 307', 307").

5. The planting system (101, 301) according to any of the preceding claims, **characterised in that** the detachable cover (107, 304) and the means for aligning (110, 305, 305', 305") are formed as a single piece.

6. The planting system (101, 301) according to any of the preceding claims, **characterised in that** the planting receptacle (102, 302) and the detachable cover (107, 304) are made of a recyclable, waterproof board.

7. The planting system (101, 301) according to any of the preceding claims, **characterised in that** the planting member (104, 307, 307', 307") has a shape of a truncated cone or a cylinder.

8. The planting system (101, 301) according to any of the preceding claims, **characterised in that** the planting member (104, 307, 307', 307") is made of a biodegradable material.

9. The planting system (101, 301) according to any of the preceding claims, **characterised in that** the planting system (101, 301) comprises a biodegradable waterproof film between the detachable cover (107, 304) and the planting receptacle (102, 302).

10. The planting system (101, 301) according to any of the preceding claims, **characterised in that** the planting receptacle (102, 302) comprises a space for excess water at the bottom (306) of the planting receptacle (102, 302).

11. The planting system (101, 301) according to any of the preceding claims, **characterised in that** the planting receptacle (102, 302) comprises drainage material at the bottom (306) of the planting receptacle (102, 302).

12. The planting system (101, 301) according to any of the preceding claims, **characterised in that** the planting system (101, 301) comprises a plurality of planting members (104, 307, 307', 307") arranged inside the planting receptacle (102, 302).

13. A method for assembling the planting system (101, 301) according to any of the preceding claims, **characterised in that** the method comprises:
- arranging the planting receptacle (102, 302) with the detachable cover (107, 304) upside down,
- positioning the planting member (104, 307, 307', 307") inside the planting receptacle (102, 302) from the bottom (306) of the planting receptacle (102, 302) in such a manner that the opening (106) of the planting member (104, 307, 307', 307") is in contact with the means for aligning (110, 305, 305', 305"),
- filling the space between the planting member (104, 307, 307', 307") and the planting receptacle (102, 302) with soil (111, 308), and
- closing the bottom (306) of the planting receptacle (102, 302).

## Patentansprüche

1. Pflanzsystem (101, 301), umfassend:
- einen Pflanzbehälter (102, 302) mit einer Öffnung (103, 303) und einem Boden (306), wobei der Boden (306) des Pflanzbehälters (102, 302) zu öffnen und zu schließen ist;
- ein Pflanzelement (104, 307, 307', 307") mit einem Hohlraum (105) mit einer Öffnung (106), durch die ein Wurzelballen einer Pflanze in den Hohlraum (105) eingeführt werden soll, wobei das Pflanzelement (104, 307, 307', 307") innerhalb des Pflanzgefäßes (102, 302) angeordnet ist,
- eine abnehmbare Abdeckung (107, 304) mit einer ersten Oberfläche (108) und einer zweiten Oberfläche (109), wobei die abnehmbare Abdeckung (107, 304) angeordnet ist, um die Öffnung des Pflanzbehälters (103, 303) abdeckt, wobei die abnehmbare Abdeckung (107, 304) Mittel zum Ausrichten des Pflanzelements (110, 305, 305', 305") in dem Pflanzbehälter (102, 302) umfasst, und
- Boden (111, 308), der in einem Raum zwischen dem Pflanzbehälter (102, 302) und dem Pflanzelement (104, 307, 307', 307") angeordnet ist;
**dadurch gekennzeichnet, dass** das Mittel zum Ausrichten (110, 305, 305', 305") mindestens einen Vorsprung umfasst, der sich von der zweiten Oberfläche (109) der abnehmbaren Abdeckung (107, 304) erstreckt und die gleiche Form wie die Öffnung (106) des Pflanzelements (104, 307, 307', 307") aufweist.

2. Pflanzsystem (101, 301) nach Anspruch 1, **dadurch gekennzeichnet, dass** der Vorsprung die Form eines Rings hat.

3. Pflanzsystem (101, 301) nach Anspruch 1, **dadurch gekennzeichnet, dass** das Mittel zum Ausrichten (110, 305, 305', 305") ein Kegelstumpf oder Zylinder ist.

4. Pflanzsystem (101, 301) nach einem der vorhergehenden Ansprüche, **dadurch gekennzeichnet, dass** das Mittel zum Ausrichten (110, 305, 305', 305") innerhalb des Hohlraums (105) des Pflanzelements (104, 307, 307', 307") angeordnet ist.

5. Pflanzsystem (101, 301) nach einem der vorhergehenden Ansprüche, **dadurch gekennzeichnet, dass** die abnehmbare Abdeckung (107, 304) und die Mittel zum Ausrichten (110, 305, 305', 305") als ein einziges Stück ausgebildet sind.

6. Pflanzsystem (101, 301) nach einem der vorhergehenden Ansprüche, **dadurch gekennzeichnet, dass** der Pflanzbehälter (102, 302) und die abnehmbare Abdeckung (107, 304) aus einer recycelbaren, wasserdichten Platte bestehen.

7. Pflanzsystem (101, 301) nach einem der vorhergehenden Ansprüche, **dadurch gekennzeichnet, dass** das Pflanzelement (104, 307, 307', 307") die Form eines Kegelstumpfes oder eines Zylinders hat.

8. Das Pflanzsystem (101, 301) gemäß einem der vorhergehenden Ansprüche, **gekennzeichnet dadurch, dass** das Pflanzelement (104, 307, 307', 307") aus einem biologisch abbaubaren Material besteht.

9. Pflanzsystem (101, 301) nach einem der vorhergehenden Ansprüche, **dadurch gekennzeichnet, dass** das Pflanzsystem (101, 301) einen biologisch abbaubaren wasserdichten Film zwischen der abnehmbaren Abdeckung (107, 304) und dem Pflanzbehälter (102, 302) umfasst.

10. Pflanzsystem (101, 301) nach einem der vorhergehenden Ansprüche, **dadurch gekennzeichnet, dass** der Pflanzbehälter (102, 302) einen Raum für überschüssiges Wasser am Boden (306) des Pflanzbehälters (102, 302) aufweist.

11. Pflanzsystem (101, 301) nach einem der vorhergehenden Ansprüche, **dadurch gekennzeichnet, dass** der Pflanzbehälter (102, 302) Drainagematerial am Boden (306) des Pflanzbehälters (102, 302) umfasst.

12. Pflanzsystem (101, 301) nach einem der vorhergehenden Ansprüche, **dadurch gekennzeichnet, dass** das Pflanzsystem (101, 301) mehrere Pflanzelemente (104, 307, 307', 307") umfasst, die innerhalb des Pflanzbehälters (102, 302) angeordnet sind.

13. Verfahren zum Zusammenbau des Pflanzsystems (101, 301) nach einem der vorhergehenden Ansprüche, **dadurch gekennzeichnet, dass** das Verfahren Folgendes umfasst:
- Anordnen des Pflanzbehälters (102, 302) mit der abnehmbaren Abdeckung (107, 304) umgedreht,
- Positionieren des Pflanzelements (104, 307, 307', 307") innerhalb des Pflanzbehälters (102, 302) vom Boden (306) des Pflanzbehälters (102, 302) so, dass die Öffnung (106) des Pflanzelements (104, 307, 307', 307') in Kontakt mit dem Mittel zum Ausrichten (110, 305, 305', 305") steht,
- Füllen des Raums zwischen dem Pflanzelement (104, 307, 307', 307") und dem Pflanzbehälter (102, 302) mit Erde (111, 308), und
- Schließen des Bodens (306) des Pflanzbehälters (102, 302).

## Revendications

1. Système de plantation (101, 301), comprenant :
- un réceptacle de plantation (102, 302) ayant une ouverture (103, 303) et un fond (306), le fond (306) du réceptacle de plantation (102, 302) pouvant être ouvert et fermé,
- un élément de plantation (104, 307, 307', 307") ayant une cavité (105) avec une ouverture (106) à travers laquelle une motte d'une plante doit être insérée dans la cavité (105), l'élément de plantation (104, 307, 307', 307") étant agencé à l'intérieur du réceptacle de plantation (102, 302),
- un couvercle amovible (107, 304) ayant une première surface (108) et une seconde surface (109), le couvercle amovible (107, 304) étant agencé pour couvrir l'ouverture du réceptacle de plantation (103, 303), le couvercle amovible (107, 304) comprenant un moyen d'alignement de l'élément de plantation (110, 305, 305', 305") dans le réceptacle de plantation (102, 302), et
- de la terre (111, 308) agencée dans un espace entre le réceptacle de plantation (102, 302) et l'élément de plantation (104, 307, 307', 307"),
**caractérisé en ce que** le moyen d'alignement (110, 305, 305', 305") comprend au moins une saillie s'étendant depuis la seconde surface (109) du couvercle amovible (107, 304) et ayant la même forme que l'ouverture (106) de l'élément de plantation (104, 307, 307', 307").

2. Système de plantation (101, 301) selon la revendication 1, **caractérisé en ce que** la saillie a la forme d'un anneau.

3. Système de plantation (101, 301) selon la revendication 1, **caractérisé en ce que** le moyen d'alignement (110, 305, 305', 305") est un cône ou un cylindre tronqué.

4. Système de plantation (101, 301) selon l'une quelconque des revendications précédentes, **caractérisé en ce que** le moyen d'alignement (110, 305, 305', 305") est agencé à l'intérieur de la cavité (105) de l'élément de plantation (104, 307, 307', 307").

5. Système de plantation (101, 301) selon l'une quelconque des revendications précédentes, **caractérisé en ce que** le couvercle amovible (107, 304) et le moyen d'alignement (110, 305, 305', 305") sont formés d'un seul tenant.

6. Système de plantation (101, 301) selon l'une quelconque des revendications précédentes, **caractérisé en ce que** le réceptacle de plantation (102, 302) et le couvercle amovible (107, 304) sont en carton recyclable et imperméable à l'eau.

7. Système de plantation (101, 301) selon l'une quelconque des revendications précédentes, **caractérisé en ce que** l'élément de plantation (104, 307, 307', 307") a la forme d'un cône ou d'un cylindre tronqué.

8. Système de plantation (101, 301) selon l'une quelconque des revendications précédentes, **caractérisé en ce que** l'élément de plantation (104, 307, 307', 307") se compose d'un matériau biodégradable.

9. Système de plantation (101, 301) selon l'une quelconque des revendications précédentes, **caractérisé en ce que** le système de plantation (101, 301) comprend un film imperméable à l'eau biodégradable entre le couvercle amovible (107, 304) et le réceptacle de plantation (102, 302).

10. Système de plantation (101, 301) selon l'une quelconque des revendications précédentes, **caractérisé en ce que** le réceptacle de plantation (102, 302) comprend un espace pour l'excès d'eau au fond (306) du réceptacle de plantation (102, 302).

11. Système de plantation (101, 301) selon l'une quelconque des revendications précédentes, **caractérisé en ce que** le réceptacle de plantation (102, 302) comprend un matériau de drainage au fond (306) du réceptacle de plantation (102, 302).

12. Système de plantation (101, 301) selon l'une quelconque des revendications précédentes, **caractérisé en ce que** le système de plantation (101, 301) comprend une pluralité d'éléments de plantation (104, 307, 307', 307") agencés à l'intérieur du réceptacle de plantation (102, 302).

13. Procédé d'assemblage du système de plantation (101, 301) selon l'une quelconque des revendications précédentes, **caractérisé en ce que** le procédé comprend :
- l'agencement du réceptacle de plantation (102, 302) avec le couvercle amovible (107, 304) à l'envers,
- le positionnement de l'élément de plantation (104, 307, 307', 307") à l'intérieur du réceptacle de plantation (102, 302) depuis le fond (306) du réceptacle de plantation (102, 302) de manière à ce que l'ouverture (106) de l'élément de plantation (104, 307, 307', 307") soit en contact avec le moyen d'alignement (110, 305, 305', 305"),
- le remplissage de l'espace entre l'élément de plantation (104, 307, 307', 307") et le réceptacle de plantation (102, 302) avec de la terre (111, 308), et
la fermeture du fond (306) du réceptacle de plantation (102, 302).
